# EUROPÄISCHE PATENTSCHRIFT

(11) **EP 1 283 756 B1**
(45) Veröffentlichungstag und Bekanntmachung des Hinweises auf die Patenterteilung: **20.07.2005**
(21) Anmeldenummer: 01947316.4
(22) Anmeldetag: 25.05.2001
(51) Int. Cl.: B23B 5/32, B24B 5/46

(54) **VERFAHREN UND MASCHINE ZUM BEARBEITEN VON EISENBAHNRÄDERN**
METHOD AND DEVICE FOR REPROFILING RAILWAY WHEELS
PROCEDE ET MACHINE POUR USINER DES ROUES FERROVIAIRES

(30) Priorität: 25.05.2000 DE 10025724
(43) Veröffentlichungstag der Anmeldung: 19.02.2003
(73) Patentinhaber: Hegenscheidt-MFD GmbH & Co. KG, 41812 Erkelenz (DE)
(72) Erfinder: BOMS, Manfred, 41844 Wegberg (DE); HAUSCHILD, Georg, 52066 Aachen (DE); HEIMANN, Alfred, 52078 Aachen (DE); HOCK, Ralf, 44625 Herne (DE); REICHE, Hans-Joachim, 40699 Erkrath (DE)
(74) Vertreter: Simons, Johannes, Dipl.-Ing.
(86) Internationale Anmeldenummer: PCT/EP2001/005978
(87) Internationale Veröffentlichungsnummer: WO 2001/089748

(56) Entgegenhaltungen:
- EP-A- 0 338 217
- EP-A- 0 456 845
- EP-A- 0 979 764
- DE-A- 3 012 997
- DE-A- 4 128 519
- DE-A- 4 238 787
- DE-B- 1 285 839
- DE-C- 488 261
- GB-A- 268 381
- GB-A- 1 104 901
- US-A- 2 754 630
- PATENT ABSTRACTS OF JAPAN vol. 1998, no. 01, 30. Januar 1998 (1998-01-30) -& JP 09 234602 A (HITACHI SEIKI CO LTD), 9. September 1997 (1997-09-09)

## Beschreibung

Die Erfindung betrifft ein Verfahren und eine Maschine zum Bearbeiten von Eisenbahnrädern. Die Bearbeitung erstreckt sich nicht nur auf das Reprofilieren von Rädern von Einzelradfahrwerken sondern auch auf das Reprofilieren der Räder von Radsätzen. Sie erstreckt sich ebenso auf das Reprofilieren von Bremsscheiben, sei es an Einzelradfahrwerken oder an den Radsätzen von sonstigen Fahrwerken. Voraussetzung für die Durchführung der erfindungsgemäßen Bearbeitung ist, dass das betreffende Eisenbahnrad bzw. der Radsatz in Achslagergehäusen drehbar gelagert ist. Dabei kann das zu bearbeitende Einzelrad bzw. der Radsatz im ausgebauten Zustand vorliegen, Einzelrad und Radsatz können aber auch im eingebauten Zustand bearbeitet werden.

Die Räder und Bremsscheiben von Schienenfahrzeugen verschleißen durch Materialabtrag, plastische Verformung sowie Brems- und Schleudervorgänge. Aus diesem Grunde müssen sie von Zeit zu Zeit reprofiliert werden und das geschieht üblicherweise durch spanende Bearbeitung. Bei ausgebauten Radsätzen erfolgt das Reprofilieren auf Überflurdrehmaschinen, die eine hohe Zerspanungsleistung aufweisen. Nachteilig ist dabei allerdings der Aufwand für die Demontage und Remontage des Radsatzes und das trifft besonders für die Radsätze von Triebfahrzeugen zu, wo vorgeschrieben ist, das gesamte Fahrzeug nach dem Ausbau eines Triebradsatzes wieder betriebstechnisch abzunehmen.

Aus diesem Grunde wurden die sogenannten Unterflurbearbeitungsmaschinen entwickelt, über welche das Eisenbahnfahrzeug mit eingebauten Radsätzen gezogen wird oder mit eigener Kraft fährt. Die Unterflurbearbeitungsmaschinen sind üblicherweise in einer besonderen Halle unterhalb des Schienenniveaus in einer Grube aufgestellt. Da sie für die Bearbeitung von schweren Fahrzeugen bei hohen Zerspanungskräften ausgelegt sind, haben sie auch ein entsprechend hohes Gewicht. Zusätzlich ist es erforderlich, dass eine Unterflurbearbeitungsmaschine auf einem schweren Fundament befestigt ist. Dementsprechend groß sind die Investitionen für Arilagen, in welchen Unterflurbearbeitungsmaschinen betrieben werden. Im Vergleich zu Überflurbearbeitungsmaschinen ist die Zerspanungsleistung von Unterflurbearbeitungsmaschinen etwas geringer.

Für Eisenbahn- und Nahverkehrsbetriebe, welche ihren Betrieb mit nur wenigen Fahrzeugen durchführen, ist die Investition für eine Radsatzbearbeitungsmaschine, sei es eine Überflur- oder eine Unterflurbearbeitungsmaschine, kaum wirtschaftlich. Derartige Betriebe sind deshalb dazu übergegangen, die zu bearbeitenden Radsätze auszubauen und an Fachwerkstätten zu verschicken, wo die Reprofilierung der Radscheiben sowie eine Bearbeitung der Bremsscheiben vorgenommen werden können. Aber auch bei den Hauptbahnen gibt es nur wenige Werkstätten, welche mit Radsatzbearbeitungsmaschinen ausgerüstet sind. Die Folge davon ist, dass ausgebaute Radsätze oder ganze Züge bzw. Wagen zum Reprofilieren mitunter über weite Strecken überführt werden müssen. Besonders in Zeiten des erschwerten Betriebes, beispielsweise im Herbst oder Winter, fallen viele Radsätze an, die zwischendurch reprofiliert werden müssen. Zwischendurch in diesem Sinne heißt, dass die Radsätze bzw. Räder zwischen den eigentlichen, betrieblich festgelegten Revisionsintervallen überarbeitet werden müssen. Die Wetterbedingungen des Herbstes mit Regen und Blattfall führen bei vielen Schienenverkehrsunternehmen zu einem Spitzenbedarf an Radsatzbearbeitung. Mitunter reicht die Kapazität der installierten Radsatzbearbeitungsmaschinen nicht aus, um den Spitzenbedarf zu decken. Tauschzeiten, Nichtverfügbarkeit, Transport- und Logistikkosten kommen zu den eigentlichen Bearbeitungskosten für die Radsätze hinzu.

In diesem Zusammenhang ist aus der US-PS 2,754,630 eine Schleifmaschine für Radsätze bekannt, die neben dem Reprofilieren der Umrisse der Radscheiben eines Radsatzes für weitere Bearbeitungen geeignet ist. Die Schleifmaschine ist auf einem ortsbeweglichen Tragrahmen montiert und dazu vorgesehen, Räder und Achsen von Personenwagen, Güterwagen, Tendern, Diesel- und Dampflokomotiven sowie von anderem Eisenbahnmaterial durch Schleifen spanabhebend zu bearbeiten. Zu diesem Zweck wird ein Radsatz in ausgebautem Zustand und von seinen Achslagern befreit mit seiner Achswelle zwischen Körnerspitzen der Werkzeugmaschine drehbar aufgenommen. Der Antrieb erfolgt durch zwei Gummireifen, die in einem Tandem auf einem Bock angeordnet sind, der auf dem Tragrahmen der Maschine in horizontaler Richtung zustellbar ist. Ein eigener Motor und Riementrieb treiben die beiden Gummireifen gleichzeitig an, die ihrerseits den Radsatz von der Rückseite der Maschine her in Umdrehung versetzen, indem sie unmittelbar unter- und oberhalb der horizontalen Drehachse des Radsatzes am Umfang von einer Radscheibe auf deren Lauffläche angreifen. Eine mit wiederum einem eigenen Antrieb versehene Schleifscheibe nimmt das Reprofilieren des Umrisses einer oder beider Radscheiben von oben her vor. Antriebsorgane und Werkzeug sind ungefähr unter einem rechten Winkel zueinander angeordnet. Für die Bedienung der bekannten Werkzeugmaschine sind mechanische, elektrische sowie hydraulische und/oder pneumatische Steuerungen vorgesehen.

Daneben ist aus der DE 42 38 787 Al ein Verfahren zur spanenden Bearbeitung eines Radsatzes und Einrichtung zur Durchführung des Verfahrens bekannt. Dafür ist eine Radsatzdrehmaschine mit Reibrollenantrieb vorgesehen für im Fahrzeug eingebaute Radsätze, die jedoch auch für das Reprofilieren ausgebauter Radsätze einsetzbar ist. Der Radsatz wird in seinen Lagerkästen drehbar aufgenommen. Reibrollen werden von unten her an die Laufflächen der Radscheiben angelegt und treiben den Radsatz an. In seinen Lagerkästen wird der Radsatz von je einer Niederhalterung aufgenommen und zentriert sowie von je einer Stütze abgestützt, die sich wiederum auf dem Maschinenständer abstützt. Die Rollenträger mit den Reibrollen sind in Gelenken gelagert, die sich an horizontal beweglichen Schlitten befinden und senkrechte Schwenkbewegungen jedes Rollenträgers erlauben. Zwar wird der Radsatz von den Reibrollen her angetrieben, die zu diesem Zweck einen eigenen Antrieb haben, jedoch ist seine Aufnahme in der Maschine vom Wirken der Reibrollen völlig unabhängig.

Daraus ergibt sich die Aufgabe für die vorliegende Erfindung, eine universelle Radsatzbearbeitungsmaschine zu schaffen, bei welcher eine Lagerung des Radsatzes zwischen zwei Körnerspitzen vermieden wird. Die Maschine soll einen einfachen Aufbau haben und dabei mit einer für die Reprofilierung von Rad- und/oder die Bearbeitung von Bremsscheiben ausreichenden Genauigkeit arbeiten. Die Maschine soll sowohl mit eigenen Energieversorgungseinrichtungen versehen sein, sie soll aber ebensogut auch an bereits vorhandene Energieversorgungseinrichtungen von Fachwerkstätten anschließbar sein. Insbesondere soll die Maschine sowohl zum Bearbeiten von einzelnen, ausgebauten Eisenbahnrädern bzw. Radsätzen dienen als auch von Eisenbahnrädern oder Radsätzen, die eingebaut im Eisenbahnfahrzeug verbleiben.

Die Aufgabe wird durch ein Verfahren nach Anspruch 1 gelöst.

Für die Bearbeitung von Bremsscheiben kommen sowohl Bremsscheiben in Betracht, welche in die Radscheibe eines Eisenbahnrades integriert sind, als auch solche, die auf der Welle eines Radsatzes befestigt sind. Üblicherweise wird das Umrissprofil einer Radscheibe, mit welchem der Eisenbahnradsatz oder der Radsatz auf der Schiene abrollt, bearbeitet. Dabei kann es sich um das Umrissprofil derselben Radscheibe eines Radsatzes handeln, welche gleichzeitig in Umdrehung versetzt wird. Es kann aber auch das Umrissprofil der Radscheibe eines Radsatzes bearbeitet werden, welche der angetriebenen Radscheibe gegenüber liegt. Eine derartige Bearbeitung auf der gegenüberliegenden Seite eines Radsatzes kann von Vorteil sein, wenn an einem der Achslagergehäuse Zusatzeinrichtungen, wie z.B. Generatoren, etc., angeflanscht sind. Während bei der Umrissbearbeitung sowohl die Lauffläche als auch der Spurkranz oder Lauffläche und Spurkranz in ihrem Umriss bearbeitet werden, beschränkt sich das Reprofilieren von Bremsscheiben regelmäßig darauf, diese Scheiben zu planen.

Die Bearbeitung kann spanabhebend erfolgen, sei es durch Drehen, Fräsen, Drehfräsen oder Schleifen. Es kann aber auch eine Bearbeitung vorgesehen sein, bei welcher die bearbeitete oder zu bearbeitende Oberfläche mit Hilfe eines Werkzeugs verfestigt wird, wie das beispielsweise vom Glattwalzen her bekannt ist.

Zusätzlich ist vorgesehen, dass das Eisenbahnrad oder der Radsatz vor oder nach der Nachbearbeitung einer Ultraschallprüfung unterzogen wird. In ähnlichem Sinne ist beabsichtigt, das Eisenbahnrad oder den Radsatz vor oder nach der Reprofilierung messtechnisch zu vermessen.. Die üblichen Messverfahren sind dem einschlägigen Durchschnittsfachmann bekannt.

Die Erfindung betrifft auch eine Werkzeugmaschine nach Anspruch 10 zur Durchführung des Verfahrens. Diese Werkzeugmaschine zeichnet sich durch einen ortsbeweglichen Tragrahmen aus. Er ist mit-einem Spannorgan zum Angreifen an einem geschlossenen inneren und/oder äußeren Lagergehäuse eines Eisenbahnrades oder Radsatzes ausgestattet. Zusätzlich sind wenigstens zwei Stützrollen vorgesehen, die dem Spannorgan gegenüberliegend mit gegenseitigem Abstand voneinander am Außenumfang der Radscheibe andrückbar sind, an deren Lagergehäuse (-n) das Spannorgan angreift, wobei wenigstens eine der Stützrollen mit einem Antrieb versehen ist. Außerdem ist in der ortsbeweglichen Maschine auch noch ein Werkzeug zum Bearbeiten der Rad- oder Bremsscheiben des Eisenbahnrades oder Radsatzes vorhanden. Ein derartiges Werkzeug ist üblicherweise auf einem Support angeordnet und führt die Bearbeitung an einer Stelle des Umfangs der Radscheibe durch, wo die Stützrollen nicht angreifen.

Nach einem vorteilhaften Ausführungsbeispiel ist der Rahmen der Werkzeugmaschine auf Rollen oder Rädern gelagert und kann über Flur verfahren werden. Mit Hilfe der Rollen oder Räder kann die Radsatzbearbeitungsmaschine an jede Stelle einer Werkstatt gebracht werden, welche die besten Platzverhältnisse bietet. Mit Hilfe der in einer Werkstatt üblicherweise vorhandenen Hebezeuge wird das Eisenbahnrad oder der Radsatz auf die Radsatzbearbeitungsmaschine gehoben und gegebenenfalls festgehalten, während die Bearbeitung stattfindet. Das gilt besonders für Eisenbahnräder oder Radsätze im ausgebauten Zustand, wobei mitunter noch nicht einmal eine Werkhalle vorhanden sein muss, sondern ein geeigneter Platz, überdacht oder im Freien, auf dem Werksgelände genügen kann.

Anders sind die Verhältnisse bei eingebauten Eisenbahnrädern oder Radsätzen. Im eingebauten Zustand ist das Eisenbahnrad oder der Radsatz mit dem zugehörigen Eisenbahnfahrzeug fest oder lose verbunden. Bei Eisenbahnfahrzeugen, welche auf Drehgestellen fahren, sind die Radsätze in die Drehgestelle fest eingebaut. Selbst im eingebauten Zustand kann das Reprofilieren der Eisenbahnräder oder Radsätze mit Hilfe der Werkzeugmaschine durchgeführt werden. Hierzu wird das Eisenbahnfahrzeug an besonders dafür vorgesehenen Anhebestellen aufgeständert. Die Höhe der Aufständerung beträgt zwischen 1 bis 2,5 m über Flur. In diesem Zustand wird die Werkzeugmaschine unter das aufgeständerte Eisenbahnfahrzeug geschoben und mit mindestens einem der Eisenbahnräder in Eingriff gebracht. Das Einfahren der ortsbeweglichen Werkzeugmaschine kann von der Seite des aufgeständerten Eisenbahnfahrzeugs her erfolgen. Üblich ist es aber, die ortsbewegliche Werkzeugmaschine auf Rollen oder Räder zu lagern, welche entlang des Werkstattgleises geführt werden. Hierbei wird die Werkzeugmaschine in Längsrichtung unter das aufgeständerte Eisenbahnfahrzeug geschoben, bis sie zum Eingriff mit einem Radsatz gebracht wird.

Während der Bearbeitung eines Eisenbahnrades oder Radsatzes wirkt auf die Werkzeugmaschine ein Drehmoment, das von einer Befestigung am Werkstattboden aufgefangen werden kann. Dazu ist es von Vorteil, zwischen dem Rahmen und dem Werkstattboden zusätzliche Befestigungsmittel anzubringen. Ebenso müssen Kräfte aufgrund von Beschleunigungen, hier insbesondere Rotationsbeschleunigungen von auf der Radsatzwelle befindlichen Fahrzeugmotoren, von der Maschinenbefestigung aufgenommen werden. In diesem Zusammenhang könnte beispielsweise ein Werkzeugbruch zum plötzlichen Abbremsen des Radsatzes führen und kurzzeitig Kräfte hervorrufen, die die Schnittkräfte der spanenden Bearbeitung übersteigen.

Normalerweise reichen die Gewichtskräfte der Werkzeugmaschine an ihren Auflagerpunkten am Werkstattboden zur Übernahme der Schnittkräfte aus. Es kann aber auch eine Klemmung der Werkzeugmaschine am Werksgleis vorgesehen werden.

Andererseits ist die Werkzeugmaschine so ausgelegt, dass ein Versatz der Maschine um wenige mm gegenüber dem Radsatz während dessen Bearbeitung für das Bearbeitungsergebnis ohne Belang ist. Das gilt für einen Versatz in Umfangsrichtung des Radsatzes ebenso wie in axialer Richtung. Die Eigensteifigkeit der Werkzeugmaschine ist hoch genug, um einen derartigen Versatz zuzulassen.

In einer weiteren Ausführungsform ist vorgesehen, die Werkzeugmaschine auf einem Fahrzeug zu befestigen. Dabei kann es sich sowohl um ein Straßenfahrzeug als auch um ein Eisenbahnfahrzeug handeln. Mit Hilfe eines solchen Fahrzeugs wird die Werkzeugmaschine zum Ort ihres Einsatzes befördert. Dabei können auf dem Fahrzeug zugleich weitere Einrichtungen vorhanden sein, welche die Werkzeugmaschine mit der notwendigen Energie versorgen, sei es elektrische Energie, sei es die Energie eines Druckmediums, wie beispielsweise Hydraulik oder Pneumatik. Darüber hinaus ist es von Vorteil, wenn das Fahrzeug, mit dem die Werkzeugmaschine transportiert wird, gleichzeitig auch noch Hebezeuge aufweist, mit denen das Anheben bzw. Absenken eines Eisenbahnrades, eines Drehgestells oder Radsatzes für die Bearbeitung auf der Werkzeugmaschine erfolgen kann. Bei nicht befestigter Werkzeugmaschine kann eine Rampe vorgesehen sein, über welche die Werkzeugmaschine vom Transportfahrzeug herab gefahren wird, um an dem Ort aufgestellt zu werden, wo die Bearbeitung erfolgen soll. Selbst in einem solchem Falle kann die Energieversorgungseinrichtung für die Maschine vom Transportfahrzeug mitgeführt werden, es ist aber ebenso möglich, die Werkzeugmaschine an bereits vorhandene Infrastrukturen für die Energieversorgung einer Werkstatt anzuschließen.

Das Spannorgan, mit dem das Lagergehäuse des Eisenbahnrades erfasst wird, kann sowohl mechanisch über eine Spindel als auch-elektrisch, pneumatisch oder hydraulisch betätigbar sein. Für den Antrieb von einer öder mehreren der Stützrollen kann ein Elektromotor oder ein von einem Druckmedium, sei es hydraulisch oder pneumatisch, beaufschlagbarer Motor vorgesehen sein. Als Bearbeitungswerkzeuge kommen Dreh-, Räum-, Fräs-, Drehfräs-, Schleif- oder Festwalzwerkzeuge in Betracht. Mit Hilfe dieser Werkzeuge können sowohl der Umriss einer Radscheibe bearbeitet als auch die Wirkungsflächen einer Bremsscheibe geplant werden. Insbesondere ist vorgesehen, dass die Räum-, Fräs-, Drehfräs- oder Schleifwerkzeug jeweils einen eigenen Antrieb aufweisen. Üblicherweise sind die Bearbeitungswerkzeuge auf Supporten angeordnet und bearbeiten die Radscheibe auf deren Umfang außerhalb der Stütz- bzw. Antriebsrollen. Für die Bearbeitung von Eisenbahnrädern im eingebauten Zustand bietet es sich an, die Spannorgane vertikal von oben nach unten wirksam werden zu la,ssen und die Stütz- bzw. Antriebsrollen seitlich außerhalb der senkrechten Radmitte anzuordnen. In der senkrechten Flucht unterhalb des Spannorgans kann sodann das Bearbeitungswerkzeug angreifen. Die Mess- und Prüfeinrichtungen hingegen können an beliebiger Stelle des Umfangs des zu prüfenden Eisenbahnrades vorgesehen sein, je nachdem wie es die Platzverhältnisse zulassen. Nach einer weiteren vorteilhaften Ausgestaltung ist ein Ultraschallprüfkopf vorgesehen, der die Radscheibe des Eisenbahnrades oder eines Radsatzes mit Ultraschall beaufschlagt. Dem Prüfkopf gegenüber liegt ein Messkopf, welcher die durchlaufenden Ultraschallimpulse empfängt.

Ebenso vorteilhaft ist es, das zu bearbeitende Eisenbahnrad bzw. die Radscheibe vor der Bearbeitung und auch nach der Bearbeitung zu vermessen. Hierdurch wird der Bearbeitungserfolg gesichert. Als Messinstrumente bieten sich mechanische Tastelemente oder optische Triangulationstaster an.

Selbstverständlich werden mit der erfindungsgemäßen Reprofilierung von Eisenbahnrädern und deren Bremsscheiben hohe Genauigkeiten angestrebt. Das gilt besonders für Hochgeschwindigkeitsräder. Allerdings bei Fahrzeugen, welche mit geringeren Geschwindigkeiten laufen, beispielsweise Güterfahrzeugen oder Nebenbahnfahrzeugen, kann man sich auch mit geringeren Genauigkeiten begnügen. Hier steht der Zweck des Vermeidens von unnötigen Radsatztransporten oder Fahrzeugüberführungen im Vordergrund. Ebenso ist die Werkzeugmaschine mit Leitblechen oder Transporteinrichtungen für Späne ausgestattet, ohne dass dies einer besonderen Erwähnung bedarf. Nachfolgend wird die Erfindung an zwei Ausführungsbeispielen näher beschrieben.

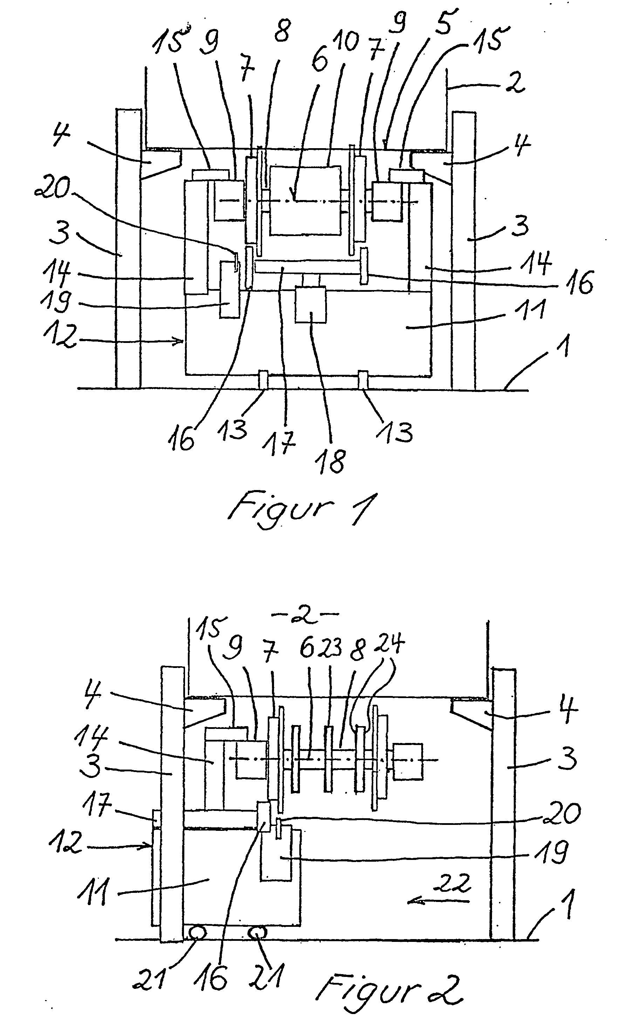

Es zeigen jeweils in stark vereinfachter, schematischer Darstellung die Figuren 1 und 2 Seitenansichten von zwei unterschiedlichen Radsatzbearbeitungsmaschinen.

Oberhalb des Werkstattbodens 1 der Figur 1 ist ein Eisenbahnfahrzeug 2 aufgeständert. Das Aufständern erfolgt mit Hilfe von senkrechten Säulen 3, welche seitlich neben dem Eisenbahnfahrzeug 2 auf dem Werkstattboden 1 stehen. Das Eisenbahnfahrzeug 2 selbst ruht auf Stützen 4, die entlang der Säulen 3 vertikal in der Höhe verfahrbar sind. Die Unterkante 5 des Wagenkastens des Eisenbahnfahrzeugs 2 befindet sich in einer Höhe zwischen 1 und 2,5 m oberhalb des Werkstattbodens 1.

Die Figur 1 zeigt das Eisenbahnfahrzeug 2 von dessen Stirnseite her gesehen. Mit dem Eisenbahnfahrzeug 2 verbunden ist ein Radsatz 6, der dazu geeignet ist, mit seinen beiden Radscheiben 7 in einem Gleis zu laufen. Die Radscheiben 7 sind mit der Radsatzwelle 8 drehfest verbunden und außerhalb der beiden Radscheiben 7 in Achslagergehäusen 9 drehbar gelagert. Im vorliegenden Beispiel ist der Radsatz 6 eines Triebfahrzeugs 2 gezeigt, auf dessen Radsatzwelle 8 zusätzlich noch ein Antriebsmotor 10 angeordnet ist. Über die beiden Lagergehäuse 9 ist der Radsatz 6 mit dem Eisenbahnfahrzeug 2 verbunden; die Einzelheiten der Verbindung wurden in der Figur 1 aus Gründen der Übersichtlichkeit weggelassen.

Unterhalb des aufgeständerten Eisenbahnfahrzeugs 2 ist der Rahmen 11 einer Werkzeugmaschine 12 in Arbeitsstellung gebracht. Der Rahmen 11 ist mit Hilfe von Rollen 13 der Räder entlang eines Werkstattgleises (nicht gezeigt) verfahrbar, über welches das Eisenbahnfahrzeug 2 zuvor in die Werkstatt gerollt wurde. Die Breite des Rahmens 11 der Werkzeugmaschine 12 ist so bemessen, dass sie zwischen den Säulen 3 der Aufständerung hindurchpasst.

Zu beiden Seiten des Rahmens 11 ragen Spannorgane 14 nach oben. An ihren äußeren oberen Enden sind die Spannorgane 14 mit Spannpratzen 15 versehen, womit sie von oben außen an den beiden geschlossenen Lagergehäusen 9 des Radsatzes 6 angreifen. Die Spannorgane 14 drücken den Radsatz 6 nach unten, bis die Radscheiben 7 mit Stützrollen 16 in Berührung kommen. Im vorliegenden Beispiel sind die Stützrollen 16 auf einer identischen Welle 17 angeordnet, die auf einem Widerlager 18 ruht, das im Rahmen 11 der Werkzeugmaschine 12 vorgesehen ist. Die Stützrollen 16 sind auf der Welle 17 drehbar gelagert und wenigstens eine der beiden Stützrollen 16 weist einen eigenen Antrieb (nicht gezeigt) auf, über welchen der Radsatz 6 bei Berührung von Radscheibe 7 und Stützrollen 16 in Umdrehung versetzt wird.

In dem vorliegenden, vereinfachten Beispiel sind die Stützrollen 16 so dargestellt, als ob sie sich senkrecht unterhalb der Radscheiben 7 befänden. Tatsächlich aber sind sie unterhalb der senkrechten Radmitte der Radscheiben 7 seitlich um einen Winkel (nicht gezeigt) versetzt angeordnet. Insgesamt sind also in der Figur 1 vier derartige Stützrollen 16 vorgesehen. Das Widerlager 18 ist so ausgestaltet, das die Stützrollen 16 seitlich von unten her elastisch gegen die Radscheiben 7 gedrückt werden können. Diese Elastizität wird beispielsweise dadurch erreicht, dass das Widerlager 18 als Hydraulik- oder Pneumatikzylinder ausgebildet ist, dem eine Druckerzeugung und ein Druckspeicher für das jeweilige Druckmittel zugeordnet sind. Durch die elastische Abstützung können sich die Stützrollen 16 eventuellen Unrundheiten der Radscheiben 7 anpassen, ohne dass es zum Schlupf beim Antrieb kommt.

Auf dem Rahmen 11 ist wenigstens ein Support 19 vorgesehen, welcher mit einem Werkzeug 20, im vorliegenden Falle beispielsweise einem Drehmeißel, bestückt ist. Anstelle eines einzelnen Supports 19 kann auch noch ein weiterer Support (nicht gezeigt) mit einem entsprechenden Werkzeug 20 auf dem Rahmen 11 angeordnet sein. Das Werkzeug 20 ist dazu vorgesehen, die Umrisskontur der Radscheiben 7 zu bearbeiten. Zu diesem Zweck wird es am Umfang einer Radscheibe 7 in Eingriff gebracht. Über eine der Stützrollen 16 wird der Radsatz 7 in Umdrehung versetzt, während das Werkzeug 20 auf dem Umfang der Radscheibe 7 durch Spanabtrag die Reprofilierung der Radscheibe 7 vornimmt.

In dem Ausführungsbeispiel der Figur 2 ist eine weitere Ausführungsform einer Radsatzbearbeitungsmaschine 12 dargestellt. Die Radsatzbearbeitungsmaschine 12 hat wiederum einen Rahmen 11, welcher auf Rollen 21 über Flur auf dem Werkstattboden 1 verfahrbar ist. Die Rollen 21 sind nicht spurgebunden, so dass die Werkzeugmaschine 12 des Ausführungsbeispiels der Figur 2 auch seitlich neben den Stützen 3 unter das aufgeständerte Eisenbahnfahrzeug 2 geschoben werden kann.

Auch der Radsatz 6 ist wieder mit dem Eisenbahnfahrzeug 2 verbunden. Aus dem Rahmen 11 ragt ein Spannorgan 14 nach oben, das mit einer Spannpratze 15 von oben am Lagergehäuse 9 des Radsatzes 6 angreift. Eine in einer Welle 17 des Rahmens 11 drehbar gelagerte Stützrolle 16 greift am Außenumfang der Radscheibe 7 an, die über das Lagergehäuse 9 gegen die Stützrolle 16 gepresst wird. Wie für das Ausführungsbeispiel der Figur 1 gilt für die Stützrolle 16 der Figur 2, dass zwei Stützrollen in seitlichem Abstand nebeneinander unterhalb der senkrechten Mitte der Radscheibe 7 vorgesehen sind.

Auf einem Support 19 ist ein Drehmeißel 20 in radialer Richtung auf die Radscheibe 7 zustellbar befestigt. Mit Hilfe des Drehmeißels 20 wird auch hier der Umriss der Radscheibe 7 des Radsatzes 6 bearbeitet. Im Falle des Ausführungsbeispiels der Figur 2 wird jeweils nur eine einzelne Radscheibe 7 bearbeitet. Nachdem die Radscheibe 7 fertig bearbeitet ist, wird die Werkzeugmaschine 12 unter dem Eisenbahnfahrzeug 2 seitlich hervorgezogen und beispielsweise auf der rechten Hälfte der in der Figur 2 gewählten Darstellung in Richtung des Pfeils 22 wieder seitlich unter das Eisenbahnfahrzeug 2 geschoben, um die zweite Radscheibe 7 zu bearbeiten. Neben den Radscheiben 7 sind auf der Radsatzwelle 8 aber auch noch Bremsscheiben 23 drehfest befestigt. Die Werkzeugmaschine 12 ist auch dazu geeignet, die seitlichen Flächen 24 der Bremsscheiben 23 zu planen.

Neben den in den Figuren 1 und 2 gezeigten Ausführungsbeispielen kann eine erfindungsgemäße Werkzeugmaschine 12 an beliebiger Stelle im Freien oder einer Werkstatthalle aufgestellt werden. Der so aufgestellten Werkzeugmaschine wird sodann ein einzelnes Eisenbahnrad oder ein Radsatz zugeführt, damit die Bearbeitung vollzogen werden kann. Nach Beendigung der Arbeiten wird die Werkzeugmaschine zu einem anderen Ort transportiert, der zum Ort der in den Figuren 1 und 2 dargestellten Beispiele eine große räumliche Entfernung aufweisen kann. In den beiden vereinfachten Darstellungen der Figuren 1 und 2 sind alle, dem einschlägigen Fachmann bekannten Betriebsmittel der Übersichtlichkeit wegen weggelassen worden, wie beispielsweise Radsatzbefestigung, Antriebsaggregate, Energieversorgung, Energieanschlüsse sowie Mess- und Prüfeinrichtungen.

### Bezugszeichenliste

- 1: Werkstattboden
- 2: Eisenbahnfahrzeug
- 3: Säulen
- 4: Stütze
- 5: Unterkante
- 6: Radsatz
- 7: Radscheibe
- 8: Radsatzwelle
- 9: Lagergehäuse
- 10: Antriebsmotor
- 11: Rahmen
- 12: Werkzeugmaschine
- 13: Rollen
- 14: Spannorgan
- 15: Spannpratze
- 16: Stützrolle
- 17: Welle
- 18: Widerlager
- 19: Support
- 20: Drehmeißel
- 21: Rolle
- 22: Transportrichtung
- 23: Bremsscheibe
- 24: seitliche Fläche

## Patentansprüche

1. Verfahren zum Reprofilieren des Umrisses der Radscheiben (7) eines in einer ortsbeweglichen Werkzeugmaschine (12) drehbar gelagerten Radsatzes (6) durch spanabhebende Bearbeitung
**dadurch gekennzeichnet, dass**
- der Radsatz (6) von einem Spannorgan (14, 15), das an wenigstens einem geschlossenen inneren und/oder äußeren Lagergehäuse (9) des Radsatzes (6) angreift, mit einer Radscheibe (7) auf deren Umfang gegen dem Spannorgan gegenüberliegende Stützrollen (16) gedrückt wird, von denen wenigstens eine
- den Radsatz (6) in Umdrehung versetzt, während gleichzeitig
- ein Werkzeug (20) eine der Radscheiben (7) des Radsatzes (6) bearbeitet.

2. Verfahren nach Anspruch 1,
**dadurch gekennzeichnet, dass**
das Umrissprofil der Radscheibe (7) des Eisenbahnrades eines Einzelradfahrwerks bearbeitet wird.

3. Verfahren nach Anspruch 1,
**dadurch gekennzeichnet, dass**
das Umrissprofil derselben Radscheibe (7) eines Radsatzes (6) bearbeitet wird, mit welcher der Radsatz (6) in Umdrehung versetzt wird.

4. Verfahren nach Anspruch 1,
**dadurch gekennzeichnet, dass**
das Umrissprofil der anderen Radscheibe (7) eines Radsatzes (6) bearbeitet wird, die der angetriebenen Radscheibe (7) gegenüberliegt.

5. Verfahren nach Anspruch 1 oder 2,
**dadurch gekennzeichnet, daß**
eine Bremsscheibe eines Bremsscheiben (23) aufweisenden Eisenbahnrades oder Radsatzes (6) bearbeitet wird.

6. Verfahren nach einem der Ansprüche 1 bis 5,
**dadurch gekennzeichnet, dass**
die Rad- und/oder Bremsscheiben (23) spanabhebend durch Drehen, Fräsen, Drehfräsen oder Schleifen bearbeitet werden.

7. Verfahren nach einem der Ansprüche 1 bis 5 oder 6,
**dadurch gekennzeichnet, dass**
die spanabhebend bearbeiteten Oberflächen der Rad- und/oder Bremsscheibe (23) mit einem Werkzeug verfestigt werden.

8. Verfahren nach Anspruch 1 oder 2,
**dadurch gekennzeichnet, dass**
das Eisenbahnrad oder der Radsatz (6) mit Ultraschall geprüft wird.

9. Verfahren nach Anspruch 1,
**dadurch gekennzeichnet, dass**
das Eisenbahnrad oder der Radsatz (6) wenigstens vor
der Reprofilierung vermessen wird.

10. Werkzeugmaschine (12) zum Durchführen des Verfahrens nach einem der Ansprüche 1 bis 9, wobei die Werkzeugmaschine auf einem ortsbeweglichen Tragrahmen (11) angeordnete Spannorgane (14, 15), Antriebsrollen (16) zum drehbaren Antreiben und Werkzeuge (20) zur spanabhebenden Bearbeitung des Umrissprofils der Radscheiben (7) eines in den Spannorganen (14, 15) aufgenommenen Radsatzes (6) aufweist, **gekennzeichnet durch**
- jeweils ein Spannorgan (14, 15) zum Angreifen senkrecht von oben an einem geschlossenen inneren und/oder äußeren Lagergehäuse (9) eines Eisenbahnrades oder Radsatzes (6), und
- zwei Stützrollen (16), die dem jeweils einen Spannorgan (14, 15) gegenüberliegend mit gegenseitigem seitlichen Abstand voneinander am Außenumfang der bzw. einer Radscheibe (7) eines Eisenbahnrades oder Radsatzes (6) andrückbar sind, an deren Lagergehäusen (9) das Spannorgan (14, 15) angreift,
- einem Antrieb für wenigstens eine der Stützrollen (16), sowie
- einem Werkzeug (20) zum Bearbeiten der Rad- (7) oder Bremsscheiben (23) des Eisenbahnrades oder Radsatzes (6).

11. Werkzeugmaschine nach Anspruch 10,
**dadurch gekennzeichnet, dass**
der Rahmen (11) auf Rollen (21) gelagert ist, die über Flur (1) verfahrbar sind.

12. Werkzeugmaschine nach Anspruch 10,
**dadurch gekennzeichnet, dass**
der Rahmen (11) auf Rollen (13) gelagert ist, die auf einem Gleis verfahrbar sind.

13. Werkzeugmaschine nach Anspruch 10,
**dadurch gekennzeichnet, dass**
der Rahmen (11) auf einem Fahrzeug befestigt ist.

14. Werkzeugmaschine nach Anspruch 13,
**dadurch gekennzeichnet, dass**
das Fahrzeug mit einem Hebezeug versehen ist zum Anheben bzw. Absenken eines Eisenbahnrades, Drehgestells oder Radsatzes (6) zur Bearbeitung durch die Werkzeugmaschine (12).

15. Werkzeugmaschine nach einem der Ansprüche 10 bis 13,
**dadurch gekennzeichnet, dass**
das Spannorgan (14, 15) mechanisch, elektrisch, pneumatisch oder hydraulisch betätigbar ist.

16. Werkzeugmaschine nach einem der Ansprüche 10 bis 13,
**dadurch gekennzeichnet, dass**
als Antrieb für die Stützrolle (16) bzw. -rollen ein Elektromotor oder ein von einem Druckmedium beaufschlagbarer Motor vorgesehen ist.

17. Werkzeugmaschine nach einem der Ansprüche 10 bis 13,
**dadurch gekennzeichnet, dass** ein Dreh- (20), Räum-, Fräs-, Drehfräs-, Schleif- oder Festwalzwerkzeug zum Bearbeiten von Rad- (7) oder Bremsscheiben (23) eines Eisenbahnrades oder Radsatzes (6) vorgesehen ist.

18. Werkzeugmaschine nach Anspruch 17,
**dadurch gekennzeichnet, dass**
das Räum-, Fräs-, Drehfräs- oder Schleifwerkzeug jeweils durch einen eigenen Antrieb antreibbar ist.

19. Werkzeugmaschine nach Anspruch 10,
**dadurch gekennzeichnet, dass**
ein Prüfkopf vorgesehen ist zu Beaufschlagung von wenigstens einer Radscheibe eines Eisenbahnrades oder Radsatzes (6) mit Ultraschall.

20. Werkzeugmaschine nach Anspruch 10,
**dadurch gekennzeichnet, dass**
wenigstens ein Messwerkzeug vorgesehen ist zum Vermessen der Geometrie des Eisenbahnrades, der Bremsscheiben (23) oder des Radsatzes (6) vor und/oder nach der Bearbeitung.

## Claims

1. Method for reprofiling the outline of the wheel disks (7) of a wheelset (6), rotatably mounted in a transportable machine tool (12), by machining,
**characterised in that**
- the wheelset (6) of a clamping element (14, 15), which engages on at least one closed inner and/or outer bearing housing (9) of the wheelset (6), is pressed with a wheel disk (7) on its circumference against backup rolls (16) opposite the clamping element, of which backup rolls at least one
- sets the wheelset (6) into rotation, while simultaneously
- a tool (20) machines one of the wheel disks (7) of the wheelset (6).

2. Method according to Claim 1, **characterised in that** the outline profile of the wheel disk (7) of the railway wheel of an individual wheel truck is machined.

3. Method according to Claim 1, **characterised in that** the outline profile of the same wheel disk (7) of a wheelset is machined (6), with which the wheelset (6) is set into rotation.

4. Method according to Claim 1, **characterised in that** the outline profile of the other wheel disk (7) of a wheelset (6) which lies opposite the driven wheel disk (7) is machined.

5. Method according to Claim 1 or 2,
**characterised in that** a brake disk (23) of a railway wheel or wheelset (6) having brake disks is machined.

6. Method according to any one of Claims 1 to 5,
**characterised in that** the wheel and/or brake disks (23) are machined through lathing, milling, turn milling, or grinding.

7. Method according to any one of Claims 1 to 5 or 6,
**characterised in that** the surfaces of the wheel and/or brake disk (23) machined are compacted using a tool.

8. Method according to Claim 1 or 2,
**characterised in that** the railway wheel or the wheelset (6) is tested using ultrasound.

9. Method according to Claim 1, **characterised in that** the railway wheel or the wheelset (6) is measured at least before the reprofiling.

10. Machine tool (12) for carrying out the method according to any one of Claims 1 to 9, wherein the machine tool has clamping elements (14, 15) arranged on a transportable support frame (11), drive rolls (16) for rotatable driving and tools (20) for machining the outline profile of the wheel disks (7) of a wheelset (6) accommodated by the clamping elements (14, 15)
**characterised by**
- in each case a clamping element (14, 15) for the vertical engagement from above on a closed inner and/or outer bearing housing (9) of a railway wheel or wheelset (6), and
- two backup rolls (16), which opposite the respective clamping element (14, 15) at a mutual distance to one another may be pressed against the outer circumference of the/a wheel disk (7) of a railway wheel or wheelset (6), on whose bearing housing(s) (9) the clamping element (14, 15) engages,
- a drive for at least one of the backup rolls (16), and
- a tool (20) for machining the wheel (7) or brake disks (23) of the railway wheel or wheelset (6).

11. Machine tool according to Claim 10,
**characterised in that** the frame (11) is mounted on rollers (21) which are movable over the floor (1).

12. Machine tool according to Claim 10,
**characterised in that** the frame (11) is mounted on rollers (13) which are movable on a track.

13. Machine tool according to Claim 10,
**characterised in that** the frame (11) is attached to a vehicle.

14. Machine tool according to Claim 13,
**characterised in that** the vehicle is provided with a hoist for lifting and/or lowering a railway wheel, truck, or wheelset (6) for machining by the machine tool (12).

15. Machine tool according to any one of Claims 10 to 13, **characterised in that the** clamping element (14, 15) may be operated mechanically, electrically, pneumatically, or hydraulically.

16. Machine tool according to any one of Claims 10 to 13, **characterised in that** an electric motor or a motor which may have a pressure medium applied to it is provided as a drive for the backup roll(s) (16).

17. Machine tool according to any one of Claims 10 to 13, **characterised in that** a lathing (20), broaching, milling, turn milling, grinding, or deep rolling tool is provided for machining wheel (7) or brake disks (23) of a railway wheel or wheelset (6).

18. Machine tool according to Claim 17,
**characterised in that** each broaching, milling, turn milling, or grinding tool is drivable by its own drive.

19. Machine tool according to Claim 10,
**characterised in that** a testing head is provided for applying ultrasound to at least one wheel disk of a railway wheel or wheelset (6).

20. Machine tool according to Claim 10,
**characterised in that** at least one measurement tool is provided for measuring the geometry of the railway wheel, the brake disks (23), or the wheelset (6), before and/or after machining.

## Revendications

1. Procédé de reprofilage de la circonférence de disques de roue (7) d'un essieu (6) monté de manière mobile dans une machine-outil (12) transportable, par usinage par enlèvement de copeaux, **caractérisé en ce que**
- l'essieu (6) d'un organe de tension (14, 15), qui s'engrène sur au moins un logement de palier (9) interne et/ou externe fermé de l'essieu (6), est pressé avec un disque de roue (7) sur la circonférence de rouleaux d'appui (16) opposés à l'organe de tension, dont au moins
- un des essieux (6) est mis en rotation, et simultanément
- un outil (20) usine une des disques de roue (7) de l'essieu (6).

2. Procédé selon la revendication 1, **caractérisé en ce que** le profil de la circonférence du disque de roue (7) d'une roue ferroviaire d'un mécanisme de roulement est usiné.

3. Procédé selon la revendication 1, **caractérisé en ce que** le profil de la circonférence du même disque de roue (7) d'un essieu (6) est usiné, avec laquelle l'essieu (6) est mis en rotation.

4. Procédé selon la revendication 1, **caractérisé en ce que** le profil de la circonférence de l'autre disque de roue (7) d'un essieu (6) est usiné, qui est opposée au disque de roue d'entraînement (7).

5. Procédé selon la revendication 1 ou 2, **caractérisé en ce qu'**un disque de freinage d'une roue ferroviaire présentant un disque de freinage (23) ou un essieu.(6), est usiné.

6. Procédé selon l'une quelconque des revendications 1 à 5, **caractérisé en ce que** le disque de roue et/ou de frein (23) sont usinés par enlèvement de copeaux par rotation, fraisage, fraisage rotatif ou rectification.

7. Procédé selon l'une quelconque des revendications 1 à 5 ou 6, **caractérisé en ce que** les surfaces à usiner par enlèvement de copeaux du disque de roue et/ou de frein (23) sont serrées dans une machine-outil.

8. Procédé selon la revendication 1 ou 2, **caractérisé en ce que** la roue ferroviaire ou l'essieu (6) sont testés aux ultrasons.

9. Procédé selon la revendication 1 ou 2, **caractérisé en ce que** la roue ferroviaire ou l'essieu (6) sont mesurés au moins avant le reprofilage.

10. Machine-outil (12) pour réaliser le procédé selon l'une quelconque des revendications 1 à 9, où la machine-outil présente des organes de tension (14, 15) disposés sur un cadre support transportable (11), des rouleaux d'entraînement (16) pour l'entraînement rotatif et les outils (20) pour l'usinage par enlèvement de copeaux du profil de circonférence de disques de roue (7) d'un essieu (6) accueilli dans les organes de tension (14, 15), **caractérisé par**
- chaque fois un organe de tension (14, 15) pour l'engrènement perpendiculairement par le haut sur un logement de palier (9) interne et/ou externe fermé d'une roue ferroviaire ou d'un essieu (6),
- deux rouleaux d'appui (16), qui peuvent être pressés sur chaque fois un organe de tension (14, 15) opposé avec une distance réciproque l'un de l'autre sur la circonférence extérieure de ou d'un disque de roue (7) d'une roue ferroviaire ou d'un essieu (6), sur lequel s'engrène le boîtier de palier (9) de l'organe de tension (14, 15),
- un entraînement pour au moins un des rouleaux d'appui (16), ainsi que
- un outil (20) pour usiner le disque de roue (7) ou de frein (23) de la roue ferroviaire ou de l'essieu (6).

11. Machine-outil selon la revendication 10, **caractérisée en ce que** le cadre (11) est disposé sur les rouleaux (21), qui sont déplaçables par section (1).

12. Machine-outil selon la revendication 10, **caractérisée en ce que** le cadre (11) est disposé sur les rouleaux (13), qui sont déplaçables sur un rail.

13. Machine-outil selon la revendication 10, **caractérisée en ce que** le cadre (11) est fixé sur un véhicule.

14. Machine-outil selon la revendication 13, **caractérisée en ce que** le véhicule est muni d'un treuil pour lever ou abaisser des roues ferroviaires, un bogie ou un essieu (6) pour l'usinage par la machine-outil (12).

15. Machine-outil selon l'une quelconque des revendications 10 à 13, **caractérisée en ce que** l'organe de tension (14, 15) est actionnable de manière mécanique, électrique, pneumatique ou hydraulique.

16. Machine-outil selon l'une quelconque des revendications 10 à 13, **caractérisée en ce que** comme entraînement pour le ou les rouleaux d'appui (16), est prévu un moteur électrique ou un moteur muni d'un milieu sous pression.

17. Machine-outil selon l'une quelconque des revendications 10 à 13, **caractérisée en ce qu'**un outil de rotation (20), d'arasage, de fraisage, de fraisage rotatif, de rectification ou de cylindrage est prévu pour l'usinage du disque de roue ou de frein (23) d'une roue ferroviaire ou d'un essieu (6).

18. Machine-outil selon la revendication 17, **caractérisée en ce que** l'outil d'arasage, de fraisage, de fraisage rotatif ou de rectification peut être entraîné chaque fois par un entraînement propre.

19. Machine-outil selon la revendication 10, **caractérisée en ce qu'**un palpeur est prévu pour traiter au moins un disque de roue d'une roue ferroviaire ou d'un essieu (6) aux ultrasons.

20. Machine-outil selon la revendication 10, **caractérisée en ce qu'**au moins un outil de mesure est prévu pour mesurer la géométrie de la roue ferroviaire, du disque de frein (23) ou de l'essieu (6) avant et/ou après l'usinage.
